# EUROPÄISCHE PATENTANMELDUNG

(11) **EP 1 023 840 A1**
(43) Veröffentlichungstag der Anmeldung: **02.08.2000**
(21) Anmeldenummer: 00101604.7
(22) Anmeldetag: 27.01.2000
(51) Int. Cl.: A22B 5/00

(54) **Verfahren und Einrichtung zum Ausschälen von Kotelettknochen**

(30) Priorität: 28.01.1999 DE 19903277
(71) Anmelder: SCHMID & WEZEL GmbH & Co., D-75433 Maulbronn (DE)
(72) Erfinder: Krause, Georg, 31141 Hildesheim (DE); Wolf, Karlheinz, 06116 Halle (DE); Grosze, Hartmut, 06193 Nauendorf (DE)
(74) Vertreter: Dreiss, Fuhlendorf, Steimle & Becker, Patentanwälte

(57) **Zusammenfassung**

Die Erfindung betrifft ein Verfahren zum Ausschälen von Kotelettknochen aus Kotelettsträngen mit folgenden Merkmalen:
- Die Geometrie des zu bearbeitenden Kotelettstranges (2) wird durch Sensoren erfaßt und die ermittelten Werte einer Bilderkennung-Auswertung zugeführt;
- mittels der erfaßten Werte werden die Schneidwerkzeuge positioniert und geführt;
- die Schneidwerkzeuge trennen das Kotelettstück (14) vom Rippenknochen (15) und der Feder (20), entlang der Innenflächen der Feder (20) und des Rippenknochens (15), wobei sie oszillieren;
- der gesamte Kotelettstrang (2) wird auf einem Plattenband (1) in Z-Achse bewegt.

## Beschreibung

Die Erfindung betrifft ein Verfahren und eine Einrichtung zum Ausschälen von Kotelettknochen nach dem Oberbegriff des Anspruches 1.

Das Ausschälen von Kotelettknochen erfolgt vorrangig in manueller Handarbeit, wobei gewisse Hilfsmittel, wie Klemmeinrichtungen zum Festhalten des Kotelettstranges und auch speziell ausgeformte Handmesser bereits im Einsatz sind.

Der Mechanisierungsgrad bei der Fleischbeärbeitung ist jedoch sehr gering, was insbesondere in der biologisch bedingten Variabilität des zu bearbeitenden Rohstoffes liegt, dies wiederum begründet durch das Alter des geschlachteten Tieres, des Geschlechtes, der Masse und schließlich der Qualität und Abmessungen der zu behandelnden Fleischstücke.

Das Herauslösen von Kotelettknochen aus derartigen Kotelettsträngen ist mit hoher monotoner und körperlich schwerer Arbeit verbunden.

Es ist daher Aufgabe der Erfindung, ein Verfahren und eine Einrichtung zum Ausschälen von Kotelettknochen zu entwickeln, mit denen die Nachteile des Standes der Technik beseitigt werden und ein qualitätsgerechtes Ausschälen von Kotelettknochen ermöglicht

Erfindungsgemäß wird die Aufgabe durch die Merkmale der Anspruche 1 und 3 gelöst. Besondere Ausgestaltungen und vorteilhafte Lösungen sind Gegenstand der Unteransprüche.

So wurde ein Verfahren geschaffen, bei dem die einzelnen Verfahrensschritte zum Herauslösen von Kotelettknochen derart erfolgen, daß das zu behandelnde Kotelettstück in seiner Geometrie mittels Sensoren abgetastet und eine Auswertung vorgenommen wird und in Auswertung der Bilderkennung eine Einstellung der Schnittebenen erfolgt, wobei die Schnitt- und Trennbewegungen der eingesetzten Einrichtungen der Form des auszuschälenden Knochens folgen.

Es gehört auch zum neuen Verfahren, daß die Schneidwerkzeuge oszillierende Bewegungen ausführen und sowohl von der Seite des Rippenknochens als auch von der Seite der Feder gefiihrt werden, wobei die Längsbewegung in Richtung des verlaufenden Kotelettstranges durch eine Längsbewegung des zu behandelnden Kotelettstranges erfolgt.

Ferner gehört zur Erfindung eine Einrichtung, mittels der das vorgestellte Verfahren realisiert wird.

Die Einrichtung besteht dabei aus einer verfahrbaren Auflage, vorzugsweise einem Plattenband, welches mit einem Anschlag und einer Längsführung ausgerüstet ist.

Unmittelbar zur Einrichtung gehören ferner Führungs- und Andruckrollen, die den zu behandelnden Kotelettstrang entsprechend arretieren, damit die zur Einrichtung gehörenden Klingen, jeweils der Geometrie des aufgelegten und befestigten Kotelettstranges folgend, gefiihrt werden können. Das Plattenband verfährt dabei in Z-Richtung, während die vorgesehen Klingen zu dem Rippenknochen und der Feder des Kotelettstranges geftihrt werden, im weitesten Sinne in X- und Y-Richtung. Während des Schneidvorganges führen die eingesetzten Klingen oszillierende Bewegungen aus.

Vorgesehene Abstreifer können dabei den Prozeß des Auslösens des Kotelettknochens positiv beeinflussen, indem das ausgelöste Fleischstück, Kotelett, vom bereits abgetrennten Knochenteil abgezogen wird und somit der jeweiligen Klinge genügend Schnittfreiheit bietet.

Mit nachfolgendem Ausführungsbeispiel soll die Erfindung näher erläutert werden. Die dazugehörige Zeichnung zeigt in
- Figur 1:: den aufgelegten Kotelettstrang mit erstem Schnitt, dem Freischneiden der Feder;
- Figur 2:: den Einsatz einer weiteren Klinge beim Einschneiden am Rippenknochen;
- Figur 3:: ein weiteres Freischneiden am Rippenknochen; und
- Figur 4:: das Abtrennen des Kotelettes mit besonders ausgebildeten Klingen.

Wie aus den einzelnen Figuren ersichtlich, wird der zu behandelnde Kotelettstrang 2 auf dem Plattenband 1 positioniert und im weitesten Sinne befestigt, was einerseits über einen Anschlag 16 und eine Längsfiihrung 17, die unmittelbar auf dem Plattenband 1 vorgesehen sind, erfolgt und zum anderen über eine Andruckrolle 4 realisiert wird.

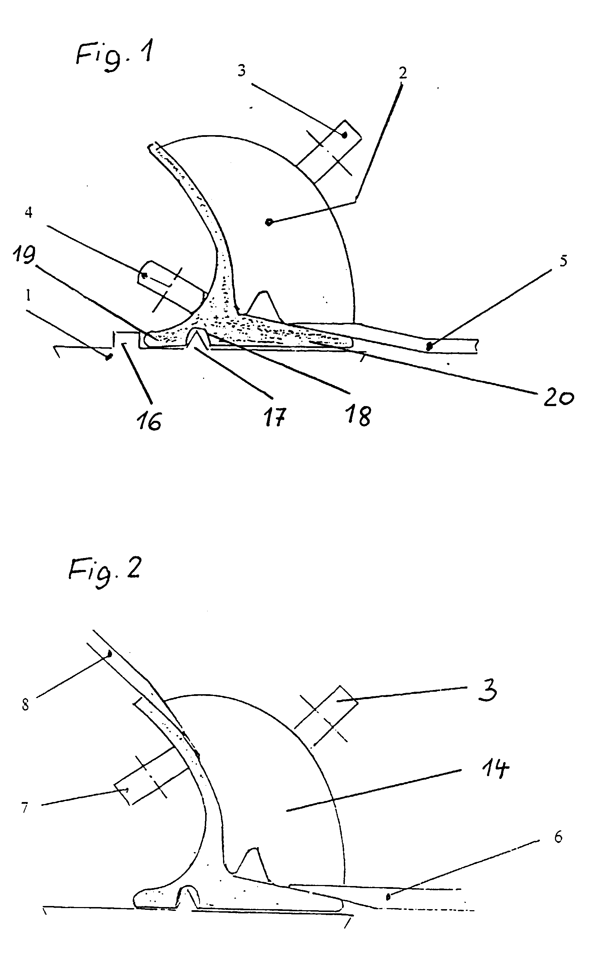

Das Endstück 19 des Rippenknochens 15 kommt dabei an dem Anschlag 16 zum Anliegen, so daß ein seitliches Verschieben nach links verhindert wird, während ein Verschieben des Kotelettstranges 2 nach rechts dadurch verhindert wird, daß hier eine Führung und Arretierung des gesamten Kotelettstranges 2 über dessen Rückenmarkkanal 18 zur Längsführung 17 gegeben ist. Dabei ist es durchaus möglich, den Rückenmarkkanal 18 in Vorbereitung des Verfahrens zum Auslösen des Kotelettstranges 2 mit einem Fräser zu behandeln, damit anatomisch bedingte Verkrümmungen bzw. Verengungen des Rückenmarkkanales 18 ausgeglichen werden und ein sicherer Sitz und eine sichere Führung zur Längsfiihrung 17 gegeben ist. Ein Abheben des Kotelettstranges 2 vom Plattenband 1 wird dadurch verhindert, daß eine vorgesehene Andruckrolle 4 gegen die Krümmung des Rückenknochens 15 zum Anliegen gebracht wird. In dieser Position ist der zu behandelnde Kotelettstrang 2 allseitig arretiert, und die zur Einrichtung gehörenden Schneidwerkzeuge, hier mit Klingen bezeichnet, können, angesteuert über ein entsprechendes Regelsystem in Arbeitsposition gebracht werden, wobei je nach Fortgang des jeweiligen Schnittes der zu behandelnde Kotelettstrang 2 zusätzlich durch eine weitere Andruckrolle 7 in seiner Lage erhalten und positioniert wird, was in der Figur 2 näher dargestellt ist.

Ferner gehören zur Einrichtung Führungsrollen 3, die unmittelbar zum Kotelettstück 14 des Kotelettstranges 2 positioniert werden und das auszulösende Kotelettstück 14 während des Schneidvorganges im weitesten Sinne halten, damit ein qualitätsgerechter Schnitt erfolgen kann.

Ist ein zu behandelnder Kotelettstrang 2 entsprechend auf dem Plattenband 1 positioniert und arretiert, läuft der erste technologische Prozeß in der Art und Weise ab, daß die Klinge 5 auf den Kotelettstrang 2 zubewegt wird und die Klinge 5 auf der Oberfläche der Feder 20 entlang gleitet und somit das Kotelettstück 14 vom Knochen, der Feder 20, trennt.

Während die Klinge in Richtung des Rippenknochens 15 in den Kotelettstrang 2 vorgetrieben wird, verfährt das Plattenband 1 mit dem darauf befindlichen Kotelettstrang 2 in Z-Richtung, so daß gleichfalls ein Längschnitt erfolgt. Das Einschneiden am R.ippenknochen erfolgt über eine Klinge 8, wie in der Figur 2 gezeigt. Auch diese Klinge 8 ist über das entsprechende Erkennungs- und Regelsystem steuerbar und antriebbar ausgebildet, so daß die Schneidbewegung, die Vorwärtsbewegung der Klinge 8 der Form des Rippenknochens 15 folgt.

Die Schneidvorgänge durch die Klingen 5 und 8 können dabei zur gleichen Zeit oder auch technologisch aufeinanderfolgend ablaufen. Vorteilhafterweise, wenn die Schneidbewegungen der Klingen 5 und 8 getrennt ablaufen, wird ein Niederhalter 6 in den bereits vorhandenen Spalt zwischen Kotelett 14 und der Feder 20 des Rippenknochens 15 geführt, so daß der auszulösende Kotelettstrang 2 in einer weiteren Position arretiert ist, was sich günstig auf den Schneidvorgang mittels der nachfolgenden Klingen 9 und 12 auswirkt.

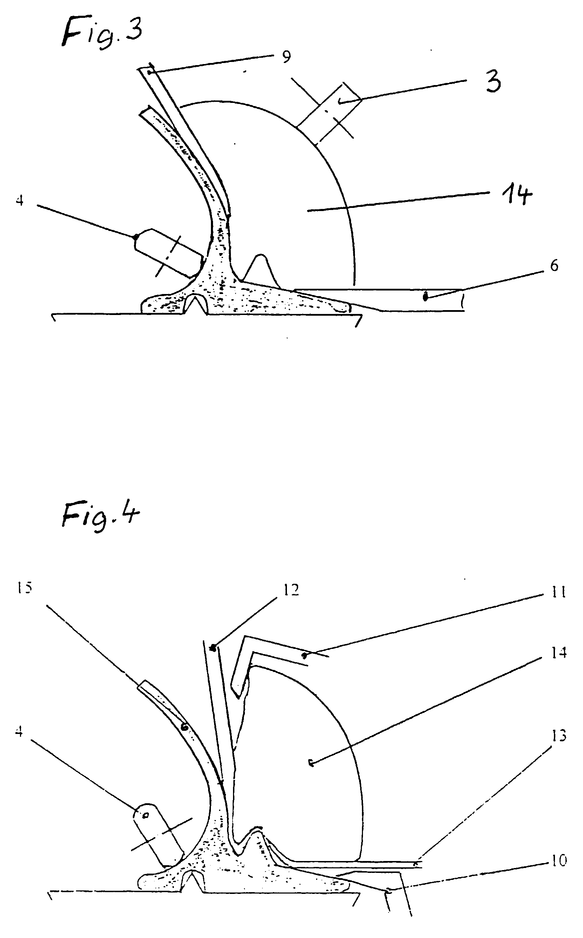

Dabei ist in der Figur 3 das weitere Freischneiden am Rippenknochen 15 gezeigt, indem nun das nachgeordnete Messer, die Klinge 9, eine der Form des Rippenknochens 15 angepaßte Form aufweist, um an dessen Oberfläche abgleiten zu können.

Schließlich folgen der Klinge 9 dann die Klingen 12 und 13, die die letzten Schnittbewegungen ausführen, um das Kotelettstück 14 vom Rippenknochen 15 endgültig zu trennen. Diese Klingen 12; 13 sind dabei der Form des Rippenknochens 15 angepaßt, indem sie im vorderen Schneidbereich Krümmungen aufweisen.

Der Prozeß des endgültigen Austrennens des Kotelettstückes 14 aus dem Kotelettstrang 2 wird durch den Einsatz eines Abstreifer 11 und eines zusätzlichen Niederhalters 10 positiv unterstützt.

Nachdem das Kotelettstück 14 ausgelöst ist, werden die Andruckrollen 4 und 7 zurückgefahren, und der ausgelöste Rippenknochen 15 kann vom Plattenband 1 entnommen werden.

## Patentansprüche

1. Verfahren zum Ausschälen von Kotelettknochen aus Kotelettsträngen, dadurch gekennzeichnet, daß
- die Geometrie des zu bearbeitenden Kotelettstranges (2) durch Sensoren erfaßt, die ermittelten Werte einer Bilderkennung-Auswertung zugeführt werden,
- aus den erfaßten Werten der Geometrie des Kotelettstranges (2) die Schneidwerkzeuge positioniert und geführt werden,
- die Schneidwerkzeuge entlang der Feder (20), entlang der Innenflächen der Feder (20) und des Rippenknochens (15), im weitesten Sinne in X- und Y-Achse wirkend, in oszillierender Weise die Trennung des Kotelettstückes (14) vom Rippenknochen (15) und der Feder (20) vornehmen und
- der gesamte Kotelettstrang (2) auf einem Plattenband (1) aufliegend, in Z-Achse den Längsschnitt vollfiihrend, bewegt wird.

2. Verfahren nach Anspruch 1, dadurch gekennzeichnet, daß der Kotelettstrang (2) über seinen Rückenmarkkanal (18) positioniert wird und der Rückenmarkkanal ( 18), in Abhängigkeit von der Ausbildung und des Verlaufes des Rückenmarkkanales (18), ausgefräst wird.

3. Einrichtung zur Durchfiihrung des Verfahrens nach Anspruch 1, dadurch gekennzeichnet, daß die Einrichtung aus einem verfahrbaren Plattenband (1) besteht, welches mit einer Längsführung (17) und einem Anschlag (16) ausgebildet ist und der in unterschiedlichen Ebenen Andruckrollen (4; 7) sowie Klingen (5; 8; 9; 12; 13) und Niederhalter (6; 10) zugeordnet sind.

4. Einrichtung nach Anspruch 3, dadurch gekennzeichnet, daß die Andruckrollen (4; 7) gegen die äußere Seite des Rippenknochens (15) geführt sind, während die Führungsrolle (3) oberhalb des Kotelett stranges (2) angeordnet ist.

5. Einrichtung nach einem der Ansprüche 3 und 4, dadurch gekennzeichnet, daß die Niederhalter (6; 10) zur Feder (20) des Rippenknochens (15) positioniert sind, während ein Abstreifer (11) in das bereits abgeschnittene Teilstück des Kotelettstückes (14) hintergreifend in der Einrichtung angeordnet ist.

6. Einrichtung nach einem der Ansprüche 3 bis 5, dadurch gekennzeichnet, daß die Klingen (5; 8; 9; 12 und 13) in wechselnder Folge hintereinander angeordnet sind und die Klingen (9; 12 und 13) im vorderen Schneidbereich der Form der inneren Kontur des Rippenknochens (15) sowie der Feder (20) entsprechend ausgebildet sind.
